# EUROPEAN PATENT APPLICATION

(11) **EP 1 426 715 A1**
(43) Date of publication of application: **09.06.2004**
(21) Application number: 03425679.2
(22) Date of filing: 21.10.2003
(51) Int. Cl.: F25D 13/06, A23L 3/36

(54) **A pre-refrigeration device for a tunnel for deep freezing food products**

(30) Priority: 06.12.2002 IT RN20020021 U
(71) Applicant: Frigo Tecnica Internazionale S.p.A, 63038 Ripatransone (Ascoli Piceno) (IT); Meta Meccanica S.r.l., 63038 Ripatransone (AP) (IT)
(72) Inventor: Lucci, Giovanni, 63038 Ripatransone (Ascoli Piceno) (IT); Pennesi, Marco, 63013 Grottammare (Ascoli Piceno) (IT)
(74) Representative: Lanzoni, Luciano

(57) **Abstract**

A pre-refrigeration d evice (1) for a t unnel (2) for d eep freezing food products, comprises: a first continuous conveyor (3), contained in the freezing tunnel (2), able to receive the fresh food products in correspondence with its first end (4) and to transfer them towards its own, opposite, second end (5), the latter being able in turn to feed a subsequent device (6) for the core deep freezing of said products; and vibrating means (7) associated to said first continuous conveyor (3) in such a way as to maintain the transported food products under agitation, in order to prevent their adhesion during the transport step when their superficial freezing is accomplished

## Description

The present invention relates to a pre-refrigeration device for a tunnel for deep freezing food products.

In the technology for continuous deep freezing in refrigerating tunnels of numerous types of fresh products such as various types of produce or various species of fish products, the deep freezing cycle is executed while the products are transported along the more or less complex path of product transport lines provided inside the tunnel.

During this transport, deep freezing causes an intense water loss - constituting or imbibing the product, depending on the nature of the products subjected to said treatment - which, when freezing, has the tendency to cause the products both to each other, and to the planes of the transport lines which support them.

For some types of product, for instance fit for individual consumption such as peas, mussels, molluscs, i.e. of all those products which in the technical language of the industry are identified with the acronym IQF - the risk of a possible collective agglomeration in a single block during the deep freezing process must be strictly excluded, since the products thus obtained would have no chance of being usefully placed on the market. Because of this state of affairs, deep freezing IQF products in tunnels was long considered practically unfeasible; such products could instead be deep frozen with totally different echnologies, implemented in special, complex and costly apparatuses, wholly different from the apparatuses built for in-tunnel deep freezing.

However, use of the deep freezing tunnel for the treatment of IQF products was a highly attractive constructive solution idea for the food producing companies in the industry, thanks to the certainly lower cost of tunnel deep-freezing installations compared to the complex and costly special installations for IQF products. This general economic advantage was to be considered even more beneficial for deep-freezing companies not exclusively aimed at the treatment of IQF products or in any case not structured t o treat very large quantities of IQF products at a time; in other words, for all those companies that would not have found it cost-efficient to incur the large financial investments required by the adoption of special installations for deep freezing IQF products.

To meet this need and to allow single deep-freezing of food products in tunnel, a known solution, described in the document FR 2744884 provides for the use of a pre-refrigeration device comprising a non reusable thin film, which slides on a stationary horizontal support positioned inside the deep-freezing tunnel. The pre-refrigeration device operates between a station for feeding the fresh products, external to the tunnel and a station for the core deep-freezing of the products which is inside the tunnel and such as to involve most of its length.

The fresh products, dispensed by the feeding station above the film and layered above it, by effect of the advance of the film along the plane, travel the entire length of the tunnel a first time undergoing a strong first superficial refrigeration due to the heat exchange which is activated with the gaseous environment within the tunnel.

After travelling through t he t unnel a first t ime, t he p roducts a re t hen unloaded by the film onto a continuous belt conveyor, which carries the products to travel through the tunnel again in the reverse direction relative to the previous one and thus undergo the final core deep freezing.

Such a solution has not been found, in practice, to be able to prevent the risk of total adhesion by some products. In the transport on non reusable film, adhesion of the products is definitely made likelier: by the direct contact between the products succeeding each other along the film; by the inevitable vertical superposition of some products (to prevent which it would be necessary to determine a precise functional relationship between the rate with which the products are released from the feeding station and the sliding speed of the film, the latter being intrinsically variable due to the variation in the diameter of the dispensing and collecting reels); and lastly by the stationary condition of the support plane and by the typical sliding mobility of the film above it, mobility which is manifested solely in the tangential direction and longitudinally to the plane and which in any case needs to be set to specific parameters in order to maintain the supported products relatively immobile, or lose their driving effect, which is indispensable for their transport.

A primary object of the present invention is therefore to provide a pre-refrigeration device for a tunnel for deep freezing food products which is able to allow, before the core deep freezing, the formation on the products of a frozen exterior superficial crust with the absolute certainty that the products have no chance to adhere to each other and/or to adhere to the underlying support plane during this superficial freezing step.

A second object of the invention is to allow the execution of the entire deep freezing cycle of the products while they travel through the whole length of the tunnel in a single direction of advance.

An additional object of the invention is to provide a pre-refrigeration device which has a relatively simple and economical structural configuration.

Another object of the invention is to provide a pre-refrigeration device which is rapidly set up and simple to operate, and which, in particular, is such as to allow the versatile use of the tunnel, both for deep freezing food products with a conventional technique, and for refrigerating IQF products.

Last, but no less important object is to provide a pre-refrigeration device that is durable and highly reliable.

In accordance with the invention, said objects are achieved by a pre-refrigeration device for a tunnel for deep freezing food products, characterised in that it comprises a first continuous conveyor, contained in the deep freezing tunnel, able to receive the fresh food products in correspondence with its own first end and to transfer them towards its own, opposite, second end, the latter being able to feed, in turn, a subsequent device for the core deep freezing of said products; and vibrating means associated to said first continuous conveyor in such a way as to maintain the transported food products under agitation, in order to prevent their adhesion during the transport step when their superficial freezing is accomplished.

The technical features of the invention, according to the aforesaid objects, can clearly be noted from the content of the claims set out below and its advantages shall become more readily apparent in the detailed description that follows, made with reference to the accompanying drawings, which show an embodiment provided purely by way of non limiting example, in which:
- Figure 1 is a schematic global elevation and sectioned view of the device;
- Figure 2 is an enlarged scale view of a detail of the device of Figure 1.

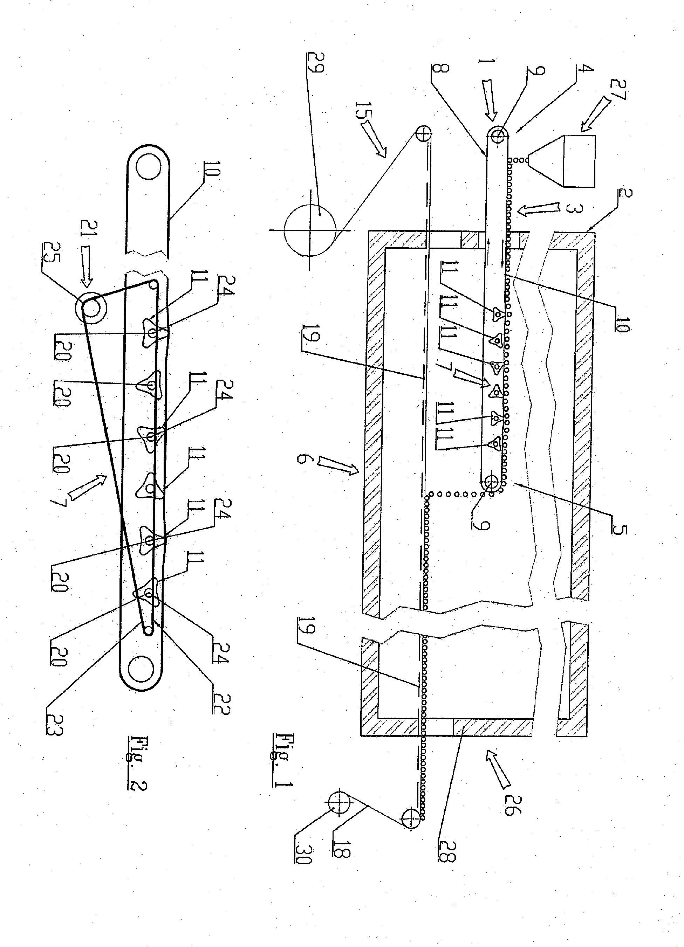

With reference to the figures of the accompanying drawings, Figure 1 globally and schematically shows an overall installation 26 for deep freezing food products preferably intended for individual consumption, or products currently identified by those versed in the art by the acronym IQF, which can be recognised in the case in question in numerous types of fish products or produce, all suitable for deep freezing.

The deep freezing installation 26 essentially and schematically comprises a deep freezing tunnel designated by the number 2, a pre-refrigeration device, for the superficial freezing of the products, designated by the number 1; a device for the core deep freezing of the products, globally designated by the number 6, and a station for feeding the fresh products, designated by the number 27.

The pre-refrigeration device 1 essentially comprises a first continuous conveyor, globally identified as 3, whereto are associated mechanical vibration means 7 able to agitate the products during their transport.

More specifically, the first continuous conveyor 3 is provided with a looped belt 8 made of elastically deformable material, which is arranged in a loop and is subtended about a pair of pulleys 9, whereof one is motorised. The looped belt 8 has a first end 4 external to the tunnel 8, positioned inferiorly to the station 27 for feeding the food products and has its own, opposite second end 5, which instead is positioned inside the tunnel 2. The looped belt 8 is provided with its own active branch 10 which, by effect of the operation of the means for motorising the pulleys 9, being movable in sliding fashion circumferentially to the loop, is able to receive over it the fresh products dispensed by the feeding station 27 and to transport them into the deep freezing tunnel 8.

The vibrating means 7 associated to the first continuous conveyor 3 are applied to the active branch 10 of the looped belt 8 and in particular comprise some abutment elements 11 associated to the active branch 10 of said looped belt 8, from the side opposite the one involved with the food products.

In accordance with Figure 2, the abutment elements 11 preferably have the shape of eccentric bodies, which are distributed along a segment of the active branch 10 of the looped belt 8 and are placed in peripheral abutment with the related face opposite the one involved by the products. The abutment elements 11 are then motorised in rotary fashion about their own axis of rotation 20 and are placed in appropriate mutual synchrony by related collective motorisation means, globally designated as 21.

Said collective motorisation means 21 are shown, by way of example, in a preferable embodiment thereof, which includes a transmission 2 2 in which flexible organs 23, for instance embodied by a belt or by a chain, are collectively coupled with pinions integral with pivot pins 24 for the motorisation of the abutment elements 11. The flexible organs 23 in turn are moved by a single motor organ 25, used for the common actuation of all abutment elements 11.

Additional embodiments of the collective motorisation means 21 can be constructed in various manners, all equivalent, for instance actuating the abutment elements 11 by means of suitable crank mechanisms.

In the operation of the first continuous conveyor 3, the abutment elements 11, devised as stated above, allow to impart to the food products transported on the active branch 10 of the looped belt 8 a sussultatory vibrating motion which, combining with the advancing motion of the active branch 10 allows to maintain the products in constant agitation in order to prevent every chance of their mutual adherence during their transport in which, by effect of the heat exchanges with the internal environment of the tunnel 2, their superficial freezing is obtained, i.e. the formation of a hard frozen crust, covering the outermost part of the products.

The device 6 for the core deep freezing of the food products is positioned in the lower part of the tunnel 8 and it comprises a second continuous conveyor 15 arranged in parallel and in operative continuation with the first conveyor 3, and positioned at a lower level than said first conveyor.

The second continuous conveyor 15 comprises in particular a non reusable film 18 and a stationary plane 19 above which the film 18, set down, is made to slide with a motion directed unidirectionally to the plane 19 itself.

The second continuous conveyor 15 is therefore able to transfer the food products along the tunnel 8 with advancing motion that is subsequent to and in agreement with the one imparted previously to the products by the first continuous conveyor 3. During said transfer, the products already frozen peripherally undergo a complete and deep, i.e. core deep freezing step, and to be then evacuated from the tunnel 8 traversing a wall 28 of the same tunnel 8 located in a position opposite to the one relating to the feeding station 27.

The invention described above allows fully to achieve the pre-set objects, further distinguishing itself in the considerable simplicity of construction of the vibrating means 7 which is able to assure relatively low construction cost, long duration and great reliability; all this duly taking into account also the fact that the vibrating elements 7 are forced permanently to operate in a highly hostile environment, represented by the interior environment of the freezing tunnel 8.

It should also be stressed that the arrangement in continuity of the first and of the second conveyor with the advancing motion of the products having the same direction is beneficial not only in terms of the continuity of motion and of the reduction in the idle times of the complete deep freezing cycle, which vice versa would be penalised by stops of the products and/or by slow-downs and trajectory inversions, but it is only advantageous in terms of simplicity of initial set-up and simplification of the operation of the installation. This latter aspect pertains in particular to the synchronisation of the motion of the looped belt 9 with the motion of the non reusable film 18 which is notoriously susceptible to variations in its sliding velocity due to the continuous variability of the winding and unwinding diameters of the film on the related reels 29 and 30. It is readily apparent that in a deep freezing installation 26 which is also aimed at achieving a high capability of variably performing the deep freezing of products, be they IQF or otherwise, the rapid set-up and the simplicity of operation of the installation are without doubt a far from secondary prerogative.

The invention thus conceived is susceptible to evident industrial application and it can also be subject to numerous modifications and variations, without thereby departing from the scope of the inventive concept. Moreover, all components can be replaced by technically equivalent elements.

## Claims

1. A pre-refrigeration device for a tunnel (2) for deep freezing food products, **characterised in that** it comprises a first continuous conveyor (3), contained in the deep freezing tunnel (2), able to receive the fresh food products in correspondence with its own first end (4) and to transfer them towards its own, opposite second end (5), the latter being able to feed, in turn, a subsequent device (6) for the core deep freezing of said products; and vibrating means (7) associated to said first continuous conveyor (3) in such a way as to maintain the transported food products under agitation, in order to prevent their adhesion during the transport step when their superficial freezing is accomplished.

2. A device, as claimed in claim 1, **characterised in that** said first continuous conveyor (3) is provided with a looped belt (8) which is configured in a loop about a pair of pulleys (9) whereof at least one is motorised; it is made of elastically deformable material; and it is provided with its own active branch (10), able to move in sliding fashion c ircumferentially to the loop, able to transport the food products upon it; said vibrating means (7) being applied to the active branch (10) of said looped belt (8).

3. A device, as claimed in claim 2, **characterised in that** said vibrating means (7) comprise abutment elements (11) associated to the active branch (10) of said looped belt (8), from the side opposite the one involved by the food products, said abutment elements (11) being able to transfer a corresponding vibrating motion to the active branch (10) of the looped belt (8) and then from the looped belt to the food products.

4. A device, as claimed in claim 3, **characterised in that** said abutment elements (11) are so devised as to impart to the food products a sussultatory motions on the active branch (10) of said looped belt (8).

5. A device, as claimed in claim 3 or 4, **characterised in that** the abutment elements (11) are shaped as eccentric bodies, placed in peripheral abutment with a face of the active branch (10) of said looped belt (8) and motorised in rotary fashion about its own axis of rotation (20).

6. A device, as claimed in claim 4 or 5, **characterised in that** the abutment elements (11) are distributed at least along a segment ofthe active branch (10) of said looped belt (8).

7. A device, as claimed in claim 6, **characterised in that** said abutment elements (11) are collectively actuated by related motorisation means (21).

8. A device, as claimed in claim 7, **characterised in that** said motorisation means (21) include a transmission (22) in which flexible organs (23) are coupled with pivot pins (24) for the motorisation of corresponding abutment elements (11) and are moved by a single motor organ (25).

9. A device, as claimed in any of the previous claims, in which the deep freezing tunnel (2) is provided with a second continuous conveyor (15) able to support the food products during their core deep freezing, **characterised in that** said first continuous conveyor (3) for the superficial freezing and the second continuous conveyor (15) for core deep freezing are arranged in parallel and in mutual operative continuation and are moved in such a way as to transfer the food products along the tunnel (2) with advancing motions having respectively the same direction.

10. A device, as claimed in claim 9, **characterised in that** the second continuous conveyor (15), able to support the food products during core deep freezing, comprises a non reusable film (18), for directly supporting the products and a stationary plane (19) over which the film (18) is set down and is unidirectionally able to slide.
